Europäisches Patentamt

European Patent Office

Office européen des brevets

(11) Veröffentlichungsnummer: **0 232 391 B1**

# (12) EUROPÄISCHE PATENTSCHRIFT

(45) Veröffentlichungstag der Patentschrift: **30.12.92**

(51) Int. Cl.⁵: **F04F 5/44**

(21) Anmeldenummer: **86905188.8**

(22) Anmeldetag: **19.09.86**

(86) Internationale Anmeldenummer:
**PCT/CH86/00132**

(87) Internationale Veröffentlichungsnummer:
**WO 87/01770 (26.03.87 87/07)**

Die Akte enthält technische Angaben, die nach
dem Eingang der Anmeldung eingereicht wurden
und die nicht in dieser Patentschrift enthalten sind.

(54) **VORRICHTUNG ZUR ERZEUGUNG UND NUTZBARMACHUNG EINER DRUCKDIFFERENZ UND DEREN TECHNISCHE ANWENDUNG.**

(30) Priorität: **21.09.85 CH 4085/85**
**03.07.86 CH 2674/86**

(43) Veröffentlichungstag der Anmeldung:
**19.08.87 Patentblatt 87/34**

(45) Bekanntmachung des Hinweises auf die
Patenterteilung:
**30.12.92 Patentblatt 92/53**

(84) Benannte Vertragsstaaten:
**AT BE CH DE FR GB IT LI LU NL SE**

(56) Entgegenhaltungen:
**CH-A- 322 228      DE-A- 3 417 610**
**DE-C- 125 181      DE-C- 609 062**
**DE-C- 829 648      FR-A- 337 171**
**FR-A- 740 179      FR-A- 1 310 598**
**FR-A- 1 411 895    FR-A- 2 114 898**
**GB-A- 292 031      US-A- 2 080 624**
**US-A- 2 093 408    US-A- 2 834 312**

(73) Patentinhaber: **STRAUB, Paul Werner**
**Schlösslistrasse 2**
**CH-3202 Frauenkappelen(CH)**

(72) Erfinder: **STARK, John, Herman**
**Grundbachstr.**
**CH-3135 Wattenwil(CH)**
Erfinder: **VERMOT, Michel**
**Flachseren 93c**
**CH-3234 Venelz(CH)**
Erfinder: **STRAUSS, Paul Werner**
**Schlösslistrasse 2**
**CH-3202 Franenkappelen(CH)**

(74) Vertreter: **Gassmann, Hans Ulrich, Dr. Patentanwalt**
**Hitzlisbergstrasse 21**
**CH-6006 Luzern(CH)**

EP 0 232 391 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

V.D.I. Zeitschrift, volume 101, no.32, 1 December 1959, (Düsseldorf, DE), F. Schupp: "Regelbare Mehrfach- Strahlsauger", see figures 1, 3-7.

Proceedings of the Institution of Mechanical Engineers, volume 185, no. 56, 1971, (London, GB) M.L. Hoggarth: "The design and performance of high- pressure injectors as Gas jet boosters", see page 756, figure 1C.

See also references of WO8701770

**Beschreibung**

Die vorliegende Erfindung befasst sich mit einer Vorrichtung zur Erzeugung einer Druckdifferenz mit Hilfe eines Rohrs von bestimmter Formgebung, welches von einem fliessbaren Medium, einer Flüssigkeit oder einem Gas durchströmt wird. Zur Erfindung gehört ferner eine technische Anwendung des Verfahrens.

Die erfindungsgemässe Vorrichtung beruht auf der Anwendung eines abgewandelten Venturirohrs. Diese seit nahezu zweihundert Jahren bekannte Vorrichtung ist ihrer Form nach der aus einer komplizierten asymmetrischen Kurve entstehende Rotationskörper. Dieser besteht aus einem Rohr, das sich, entsprechend der Kurvenform, in seiner Längsrichtung asymmetrisch verengt und wieder erweitert. Wird das Venturirohr von einem fliessbaren Medium durchströmt, so entsteht in seinem Innern ein Unterdruck - relativ zu dem am Ein- und Austrittsquerschnitt gemessenen Druck - wobei die Druckdifferenz gemäss dem von Bernoulli 1680 formulierten Gesetz an der engsten Stelle des Rohrs ein Maximum erreicht.

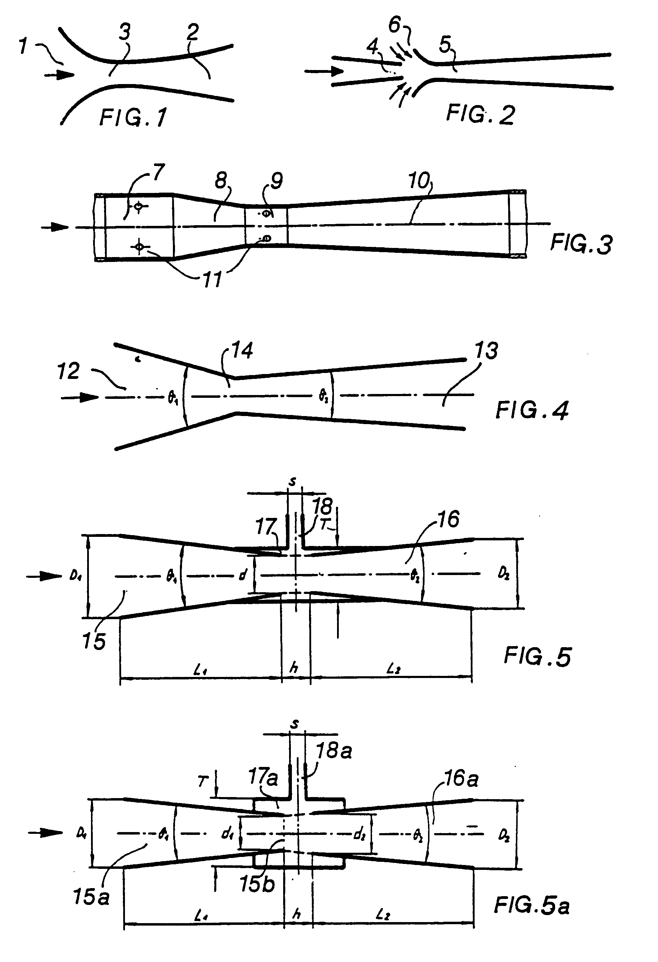

Das Venturirohr findet heute noch vielfältige Verwendung, z.B. als Instrument zur Messung der Strömungsgeschwindigkeit von Flüssigkeiten und Gasen in Rohren, ferner zur Messung der Fahrtgeschwindigkeit von Flugzeugen und Schiffen, als Wasserstrahlpumpe (Fig. 2) zum Evakuieren von Gefässen, ferner in Vergasern von Verbrennungsmotoren und in Vorrichtungen zum Waschen von Gasen.

Bei der Verwendung des Venturirohrs als Messinstrument erweist es sich als nachteilig, dass die an den Messstellen abgelesene Druckdifferenz nicht in einer einfach berechenbaren Weise von der Strömungsgeschwindigkeit abhängt. Viele weitere Faktoren, wie z.B. die Viskosität und Dichte des fliessenden Mediums, die Höhe des Ein- und Austrittsdruckes und nicht zuletzt die genaue Geometrie der Düsenform und die Rauhigkeit der Wand bestimmen das Messresultat in entscheidender Weise mit, so dass in der Praxis für jede definierte Messaufgabe eine nur in engen Grenzen geltende Eichkurve erstellt werden muss. Gewisse Vereinfachungen und Normierungen der Düsenform (Fig. 3) haben zwar Verbesserungen erbracht und ermöglichen eine bessere Reproduzierbarkeit der Messresultate. Der Zusammenhang zwischen Strömungsgeschwindigkeit und gemessener Druckdifferenz bleibt indessen auch beim normierten Venturimodell immer noch kompliziert.

Es wurde nun gefunden, dass überraschende und aus der bisherigen Literatur nicht abzuleitende Vorteile erzielt werden können, wenn man das Venturirohr herkömmlicher Form durch einen Doppelkonus gemäss der Figur 5a ersetzt, dessen geometrische Verhältnisse die folgenden Bedingungen erfüllen:

$F = (1 + \sin \theta_1)^2 \cdot \sin^2 \theta_2 \leqq 0,02$ ,
$1^o \leqq \theta_1 \leqq 10^o$ , $1^o \leqq \theta_2 \leqq 10^o$ ,
$0,001\ d \leqq h \leqq 20\ d$
$d \leqq D \leqq 200\ d$

wobei

$\theta_1$     den Oeffnungswinkel des Eintrittskonus und
$\theta_2$     den Oeffnungswinkel des Austrittskonus
F     die wie oben durch die beiden Oeffnungswinkel $\theta_1$ und $\theta_2$ definierte Funktion,
d     den Durchmesser der kleineren, sich gegenüberliegenden Hohlkegelstumpfflächen,
D     den grössten Durchmesser der beiden Kegelstümpfe
       und
h     den freien Abstand zwischen den beiden Hohlkegelstümpfen

bedeuten;

der innere Durchmesser T des Hohlzylinders soll zwischen 1,5d und 100d und die Weite S des Anschlussstutzens zwischen 0,001d und 10 d betragen, und weiterhin wird der Abstand h durch einseitiges Beschneiden des austrittsseitigen Hohlkegelstumpfs gewonnen, derart, dass die kleinere Grundfläche des eintrittsseitigen Hohlkegels vom Durchmesser d mit der gedachten Schnittebene der beiden Hohlkegel zusammenfällt, und die Spitze des austrittsseitigen Hohlkegels um die Strecke h verkürzt wird, so dass der kleinste Durchmesser des austrittsseitigen Hohlkegels durch das Beschneiden auf den Betrag

$$d_2 = d + h \cdot \left(\frac{D_2 - d}{L_2 + h}\right)$$

vergrössert wird, wobei $d_2$ den kleinsten Durchmesser des austrittsseitigen Konus, $D_2$ dessen grössten Durchmesser und $L_2$ dessen Länge bedeuten.

An und für sich ist eine Vorrichtung zum Nutzbarmachen einer Druckdifferenz bestehend aus einem schlanken Doppelkonus bekannt aus der US-A 2 080 624. Ein Doppelkonus wie er in der Fig. 4 in seiner einfachsten Form schematisch dargestellt ist, ermöglicht nicht nur eine leichtere Darstellung und Berechnung der hydrodynamischen Verhältnisse und eine bessere Uebereinstimmung von gemessenen und berechneten Daten innerhalb eines weiten Bereichs; völlig überraschend wurde auch ein wesentlich höherer Wirkungsgrad gefunden. D.h. bei gegebener Strömungsgeschwindigkeit des fliessenden Mediums wurde eine höhere Druckdifferenz zwischen dem Eintrittsquerschnitt und der engsten Stelle des Doppelkonus gefunden. Diese höhere Druckdifferenz bedeutet eine bessere Saugwirkung bei gleichem Eintrittsdruck. Dagegen ist der gesamte Strömungswiderstand des Doppelkonus bei einem gegebenen Durchsatz des fluiden Mediums durch die Druckdifferenz zwischen Ein- und Austrittsquerschnitt des gesamten Doppelkonus gegeben. Diese ist massgebend für den Wirkungsgrad, d.h. für das Verhältnis zwischen Druckaufwand und Saugwirkung, wie dies z.B. in der weiter hinten gezeigten Tabelle 2 dargestellt ist.

Dieser Wirkungsgrad kann teilweise aus dem numerischen Wert der Funktion F abgeschätzt werden: Je tiefer der numerische Wert unter dem oben angegebenen Grenzwert von 0,02 liegt, desto höher ist der Wirkungsgrad des Doppelkonus. Er ist jedoch ausserdem noch von der Länge sowohl des Eintrittsals auch des Austrittskonus abhängig.

Der hohe Wirkungsgrad kommt insbesondere bei geringen axialen Strömungsgeschwindigkeiten des fliessbaren Mediums zur Geltung, d.h. unter Verhältnissen bei denen die bekannten Vorrichtungen erfahrungsgemäss ihre Wirkung verlieren. Mit Bezug auf die Fig. 4, in welcher der erfindungsgemässe Doppelkonus schematisch dargestellt ist, sind in der nachfolgenden Tabelle 1 die Werte der Funktion F für einige ausgewählte Konfigurationen wiedergegeben:

$$\text{Tabelle 1:} \quad F = (\ 1 + \sin\theta_1\ )^2 \cdot \sin^2\theta_2$$

"Gütefaktor" des Doppelkonus für verschiedene Oeffnungswinkel des Ein- bezw. Austrittskonus.

| Eintritts- konus Winkel $\theta_1$ ° | Austrittskonus Winkel $\theta_2$ | | | | |
|---|---|---|---|---|---|
| | 1 | 2 | 6 | 10 | 15 |
| 1 | 0,0003 | 0,0028 | 0,0113 | 0,0312 | 0,0693 |
| 3 | 0,0003 | 0,0030 | 0,0121 | 0,0334 | 0,0742 |
| 6 | 0,0004 | 0,0033 | 0,0133 | 0,0368 | 0,0817 |
| 10 | 0,0004 | 0,0038 | 0,0151 | 0,0415 | 0,0923 |
| 15 | 0,0005 | 0,0043 | 0,0173 | 0,0478 | 0,1061 |

Aus der Tabelle 1 ist ersichtlich dass der Wert der Funktion F auf die Grösse des Austrittswinkels sehr viel empfindlicher reagiert als auf diejenige des Eintrittswinkels: So lange nur der Austrittswinkel klein genug ist, können auch mit verhältnismässig grossen Eintrittswinkeln immer noch gute Resultate erhalten werden. Es geht aus der Tabelle hervor, dass der Oeffnungswinkel, zumindest auf der Austrittsseite 10° auf keinen Fall übersteigen sollte. Zur Klassierung der Güte eines Doppelkonus gemäss der vorliegenden Erfindung gelten ungefähr die folgenden Richtwerte:

| Funktion F | < | 0,0035 | | | ausgezeichnet |
|---|---|---|---|---|---|
| | | 0,0035 | - | 0,0155 | sehr gut |
| | | 0,0155 | - | 0,0250 | gut |
| | | 0,0250 | - | 0,0500 | zufriedenstellend |
| | | 0,0500 | - | 0,1100 | knapp genügend |
| | | | > | 0,1100 | ungenügend |

Mit der zuvor erwähnten und in den Ansprüchen festgelegten Begrenzung von $F \leq 0{,}02$ wird sichergestellt, dass der erfindungsgemässe Doppelkonus auch hohen Anforderungen genügt. Zugleich erfolgt damit eine Abgrenzung gegenüber früher beschriebenen, scheinbar ähnlichen Vorrichtungen.

Der erfindungsgemässe Doppelkonus ist vielseitiger Anwendung fähig, z.B. als Vakuumpumpe und als Druckpumpe, sowie in vielen davon abgeleiteten Funktionen, z.B. als regulierendes Element. Da sein Wirkungsgrad als Pumpvorrichtung auch bei kleinem Eintrittsdruck und geringer Durchflussgeschwindigkeit erhalten bleibt, bietet er gegenüber allen Strahlpumpen oder Ejektoren üblicher Bauart wesentliche technische Vorteile. Insbesondere lässt er sich z.B. zur Gewinnung von Energie aus einem langsam fliessenden Gewässer verwenden.

Die technischen Vorteile des Doppelkonus lassen sich z.B. bei seiner Verwendung als Wasserstrahlpumpe - im Vergleich zu einer Strahlpumpe üblicher Bauart - augenfällig demonstrieren:

Tabelle 2

| Leistungsvergleich zwischen erfindungsgemässen Doppelkonus und konventioneller Wasserstrahlpumpe. Pumpleistung bei konstantem Eingangsdruck. | | | | | | |
|---|---|---|---|---|---|---|
| Wasserdruck am Eingang mb | Doppelkonus | | | konv.Wasserstrahlpumpe | | |
| | Vakuum mb nach 10 min | Wasser ltr./h | | Vakuum mb nach 10 min | Wasser ltr./h | |
| | | a*) | b*) | | a*) | b*) |
| 300 | -225 | 78 | 115 | -105 | 125 | 140 |
| 400 | -310 | 91 | 123 | -140 | 143 | 163 |
| 500 | -385 | 104 | 139 | -185 | 160 | 183 |
| 600 | -450 | 112 | 151 | -215 | 176 | 200 |
| 700 | -500 | 123 | 160 | -250 | 190 | 218 |

*) Wasserverbrauch: a*) am Anfang b*) am Ende der Evakuierung

Eine weitere interessante Eigenschaft des erfindungsgemässen Doppelkonus ist die Abhängigkeit seiner Wirksamkeit von dem im System herrschenden Druck: Unter identischen geometrischen Bedingungen und bei gleichem Flüssigkeitsdurchsatz wird die Druckdifferenz zwischen dem Eintrittsquerschnitt und der an der engsten Stelle angebrachten seitlichen Anzapfung umso höher, je höher der im System herrschende Gesamtdruck ist. Im gleichen Sinne ändert sich auch der Fliesswiderstand durch den Doppelkonus, der mit steigendem Druck stetig geringer wird. Dieses Verhalten ist völlig überraschend und aus der bisher bekannten hydrodynamischen Theorie - zumindest für inkompressible Medien - nicht zu erwarten.

Tabelle 3:  Doppelkonus mit einer Gesamtlänge von 140 mm

Oeffnungswinkel von Ein- und Austrittskonus je 6°

Durchmesser an der engsten Stelle : 1,94 mm.

Medium: Wasser bei 20°C

Durchsatz bei konstantem Druckabfall von 0,600 bar:

| Systemdruck am Eingang | Durchsatz ltr/min |
|---|---|
| 1  bar | 185 |
| 2  " | 225 |
| 3  " | 255 |

Als weiterer überraschender Effekt des erfindungsgemässen Doppelkonus wurde gefunden, dass - bei gleicher Strömungsgeschwindigkeit - die zwischen dem Eintrittsquerschnitt und der engsten Stelle sich einstellende Druckdifferenz in offenen Systemen höher ist als in einem geschlossenen System mit erzwungener Zirkulation. D.h. ein in ein mit einer bestimmten Geschwindigkeit fliessendes Gewässer eingetauchter Doppelkonus erzeugt eine höhere Druckdifferenz als ein gleicher Doppelkonus, in welchem mit gleicher Geschwindigkeit eine Strömung mittels einer Förderpumpe bewirkt wird. Dabei gilt insbesondere auch hier, dass der Doppelkonus auch bei geringem Eingangsdruck, bezw. kleiner Strömungsgeschwindigkeit wirksam bleibt.

In seiner einfachsten Form (Fig. 4) besteht der Doppelkonus aus zwei mit ihren kleineren Grundflächen in axialer Richtung verbundenen Hohlkegelstümpfen. Um eine gute Wirksamkeit zu erzielen, werden die Oeffnungswinkel des Einbezw. Austrittskegels so gewählt, dass die Funktion F gemäss der Tabelle 1 einen günstigen Wert annimmt. Geeignete Oeffnungswinkel der beiden Kegel liegen zwischen 1 und 10 Winkelgraden; das Verhältnis der Durchmesser am Ein- bezw. Austritt zum Durchmesser an der engsten Stelle des Doppelkonus, welches sowohl eine Funktion des Oeffnungswinkels als auch der Länge jedes Hohlkegelstumpfs ist, liegt innerhalb der Grenzen von 1:1 bis 1:200.

Ein Doppelkonus gemäss der Figur 4 besitzt allerdings lediglich einen theoretischen Wert: damit die bei der Durchströmung des Doppelkonus erzeugte Druckdifferenz nutzbar gemacht werden kann, benötigt man an dessen engster Stelle eine Oeffnung, durch welche der an dieser Stelle herrschende Unterdruck nach aussen wirksam gemacht werden kann.

Als solche eignet sich z.B. eine kreisrunde Oeffnung mit einem radial gerichteten Anschlussstutzen. Diese Anordnung besitzt jedoch den Nachteil einer gewissen Asymmetrie, welche sich insbesondere dann ungünstig auswirkt, wenn durch die seitliche Oeffnung eine stärkere Strömung in den axialen Hauptstrom gelangt.

Für die praktische Anwendung wurde deshalb eine spezielle Ausführungsform entwickelt, die sich für die technische Anwendung als günstig erwiesen hat. Sie ermöglicht insbesondere, einen an der engsten Stelle eintretenden Nebenstrom symmetrisch auf den axialen Strömungsquerschnitt zu verteilen. Bei dieser Ausführungsform (Fig. 5) sind die beiden Hohlkegelstümpfe an der engsten Stelle von einander getrennt, so dass sich die beiden kleineren Grundflächen in einem Abstand h gegenüberstehen. Gleichzeitig sind die beiden Hohlkegelstümpfe koaxial durch ein zylindrisches Rohrstück verbunden, welches die offene Lücke umschliesst und die beiden Teilstücke mechanisch zusammenhält. Das zylindrische Verbindungsrohr trägt an seiner Mantelfläche einen oder mehrere radial gerichtete Anschlussstutzen. Wenn der kleinste Durchmesser der beiden Hohlkegelstümpfe mit d bezeichnet wird, ergeben sich für die Abmessungen im Bereich der Kegeldüse etwa die folgenden günstigsten Werte:

| Abstand zwischen den Kegelstumpfflächen: | h = 0,001....20 d |
|---|---|
| Innendurchmesser des Hohlzylinders: | T = 1,5 ....100 d |
| Innendurchmesser des Anschlussstutzens: | S = 0,001....10 d |

Es hat sich weiterhin gezeigt, dass die Leistung des erfindungsgemässen Doppelkonus durch eine leicht abgeänderte Ausführungsform noch weiter gesteigert werden kann:
Nach Anspruch 1 (Fig. 5a) wird der Doppelkegel zur Erreichung einer höheren Leistung asymmetrisch

6

geteilt, indem, ausgehend von einem Doppelkonus gemäss der Fig. 4, der gesamte Abstand h zwischen den beiden Kegelstümpfen durch einseitiges Beschneiden des Austrittskegels gewonnen wird: Die kleinere Grundfläche des Eintrittskegelsstumpfs fällt dabei mit der ursprünglichen Grundfläche zusammen und behält ihren ursprünglichen Durchmesser d; der austrittsseitige Kegelstumpf wird um die Länge h beschnitten; seine Grundfläche wird dabei um die Strecke h in Stromrichtung vom Eintrittskegel abgerückt. Der Durchmesser seiner kleineren Grundfläche wird dadurch auf den Wert

$$d_2 = d + h \cdot \frac{(D_2 - d)}{(L_2 + h)}$$

vergrössert, wobei $D_2$ den grössten Durchmesser und $L_2$ die Länge des austrittsseitigen Kegelstumpfs bedeuten.

Das Wesen der Erfindung und ihre möglichen technischen Anwendungen werden durch die beigefügten Figuren 1 bis 6 erläutert, ohne dass jedoch damit ihr Umfang in irgendeiner Weise eingeschränkt werden soll.

Liste der Figuren:

Figur 1:      Venturirohr in herkömmlicher Form
2:            Wasserstrahlpumpe als Anwendung des Venturirohrs.
3:            Normierte Form des Venturirohrs ISO 15 (1983)
4:            Grundform eines (asymmetrischen) Doppelkonus.
5:            Symmetrische Ausführungsform eines Doppelkonus.
5a:           Verbesserte asymmetr. Ausführungsform gemäss, Patentanspruch 1.
6:            Anwendung eines Doppelkonus als Druckpumpe

Figurenbeschreibung:

Figur 1: Die herkömmliche Form des Venturirohrs im Längsschnitt. Das fliessende Medium strömt durch den Eintrittskonus (1) über die engste Stelle (3) zum Austrittskonus (2).Der geringste Druck herrscht an der Verengung (3).

Figur 2: Die herkömmliche Form der Wasserstrahlpumpe als Anwendung des Venturirohrs. Wasser strömt durch die Düse (4) gegen das Venturirohr (5). Durch den Unterdruck wird Luft oder ein anderes fliessbares Medium an der Stelle (6) eingesogen.

Figur 3: Normierte Form des Venturirohrs gemäss Normblatt ISO 15 (1983). Das Medium fliesst vom zylindrischen Eintrittsrohr (7) zum Eintrittskegel (8), dessen Kegelwinkel ca. 21° beträgt. Das zylindrische Düsenstück (9), dessen Länge gleich dem Durchmesser ist, ist, wie auch das Eintrittsrohr (7) mit seitlichen Oeffnungen (11 versehen. Durch das konische Austrittsrohr (10) mit einem Oeffnungswinkel zwischen 7,5 und 10° wird das fliessende Medium weitergeleitet.

Figur 4: Der Doppelkonus in seiner einfachsten Grundform mit dem Eintrittskegel (12) und dem Austrittskegel (13). Der tiefste Druck herrscht an der Stelle (14).

Figur 5: Eine symmetrische Ausführungsform des Doppelkonus im Längsschnitt. Der Eintrittskonus (15) besitzt die Länge $L_1$, den grössten Durchmesser $D_1$ und den Oeffnungswinkel $\theta_1$; der Austrittskonus (16) besitzt die Länge $L_2$, den grössten Durchmesser $D_2$ und den Oeffnungswinkel $\theta_2$; die kleineren Grundflächen der beiden Kegelstümpfe, beide mit dem gleichen Durchmesser d sind innerhalb des zylindrischen Verbindungsrohrs (17) im Abstand h angeordnet. Das zylindrische Rohr (17) mit dem inneren Durchmesser T ist mit einem seitlichen Anschlussstutzen (18) versehen, welcher den Innendurchmesser S besitzt.

Figur 5a: Der erfindungsgemässe Doppelkonus gemäss Anspruch 1 im Längsschnitt. Die Anordnung der beiden Hohlkegelstümpfe ist ähnlich wie in Fig. 5; der austrittsseitige Kegel ist, ausgehend von der ursprünglichen Schnittebene (14) der beiden Kegel in der schematischen Figur 4, in Stromrichtung um die Strecke h verschoben.Gleichzeitig ist der Austrittskegelstumpf (16a) um die Länge h verkürzt und damit vom eintrittseitigen Kegel abgerückt. Der Eintrittskegelstumpf (15a) behält damit seinen ursprünglichen kleinsten Durchmesser $d_1 = d$; derjenige des Austrittskegelstumpfs (16a) wird etwas grösser und beträgt nunmehr

$$d_2 = d + h \cdot \frac{(D_2 - d)}{(L_2 + h)} \; .$$

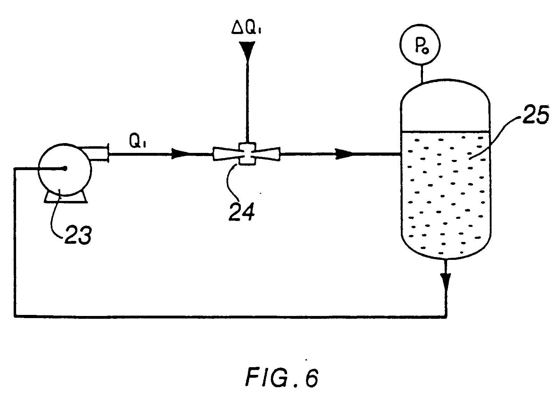

Figur 6: Anwendung des erfindungsgemässen Doppelkonus als Druckpumpe: Mittels der Turbine (23) wird Wasser im Kreislauf durch den Doppelkonus (24) und den geschlossenen Druckkessel (25) gepumpt. Am seitlichen Stutzen des Doppelkonus wird durch den erzeugten Unterdruck weiteres fliessbares Medium angesaugt. Wird als solches z.B. Luft angesaugt, so vergrössert sich der Druck im Druckkessel (25) bei gleichbleibendem Flüssigkeitsvolumen. Wird statt dessen Wasser angesaugt, so vergrössert sich der Druck unter Verkleinerung des Luftvolumens.

Ein Vergleich mit der konventionellen Wasserstrahlpumpe zeigt auch hier wieder die Ueberlegenheit der erfindungsgemässen Vorrichtung. Bei gleichen Abmessungen wie sie im vorhergehenden Beispiel verwendet wurden, erreicht man bei einem Wasserdruck von 1000 mb am Eingang der Pumpvorrichtung mit einer konventionellen Wasserstrahlpumpe einen Enddruck im Druckkessel von 1000 mb, während mit dem Doppelkonus ein Enddruck von 5000 mb erreicht wurde, d.h. ein Mehrfaches des von der Zirkulationspumpe erzeugten Eingangsdruckes.

**Patentansprüche**

1.  Vorrichtung, bestehend aus einem aus zwei mit ihren kleineren Grundflächen sich koaxial gegenüberliegenden Hohlkegelstümpfen gebildeten Doppelkonus, welcher von einem an seiner Mantelfläche einen seitlichen Anschlussstutzen tragenden Hohlzylinder umschlossen ist, dadurch gekennzeichnet, dass der Doppelkonus die geometrischen Bedingungen

    $0,001d \leq h \leq 20d$,
    $d \leq D \leq 200d$
    $1° \leq O_1 \leq 10°$
    $1° \leq O_2 \leq 10°$ ,

    sowie ausserdem die Bedingung

    $$F = (1 + \sin \theta_1)^2 \cdot \sin^2 \theta_2 \leq 0,02$$

    erfüllt, wobei

    d    den kleinsten Durchmesser an der gedachten Schnittebene der beiden Hohlkegelstümpfe,
    h    den Abstand zwischen den Grundflächen der beiden Hohlkegelstümpfe,
    D    den grössten Durchmesser der beiden Hohlkegelstümpfe,
    $\theta_1$    den Oeffnungswinkel des eintrittsseitigen und
    $\theta_2$    den Oeffnungswinkel des austrittsseitigen Hohlkegels, sowie
    F    die oben definierte Funktion

    bedeuten, und wobei ausserdem der innere Durchmesser T des Hohlzylinders zwischen 1,5 und 10 d, sowie die Weite S des Anschlussstutzens zwischen 0,001 und 10 d betragen sollen und der Abstand h durch einseitiges Beschneiden des austrittsseitigen Hohlkegelstumpfs gewonnen wird, derart, dass die kleinere Grundfläche des eintrittsseitigen Hohlkegels vom Durchmesser d mit der gedachten Schnittebene der beiden Hohlkegel zusammenfällt , und die Spitze des austrittsseitigen Hohlkegels um die Strecke h verkürzt wird, so dass der kleinste Durchmesser des eintrittsseitigen Hohlkegels weiterhin gleich d ist, und derjenige des austrittsseitigen Hohlkegels durch das Beschneiden auf den Betrag

    $$d_2 = d + h \cdot \frac{(D_2 - d)}{(L_2 + h)}$$

    vergrössert wird, wobei $d_2$ den kleinsten Durchmesser des austrittsseitigen Konus, $D_2$ dessen grössten Durchmesser und $L_2$ dessen Länge bedeuten, und d sowie h die oben gegebene Bedeutung besitzen.

2.  Vorrichtung gemäss Patentanspruch 1 zur Erzeugung von Ueberdruck, dadurch gekennzeichnet, dass man in einem geschlossenen System ein inkompressibles fliessbares Medium im Kreislauf nacheinander durch einen Doppelkonus, ein mindestens teilweise mit einem kompressiblen Medium ausgefülltes

EP 0 232 391 B1

Druckgefäss und wieder zurück zur Pumpe fördert, wobei durch den im Doppelkonus erzeugten Unterdruck weiteres fliessbares Medium in den Kreislauf eingesaugt, und dadurch der Druck erhöht wird.

## Claims

1. Device consisting of a double cone which is composed of two hollow cone trunks opposing one another axially, which hollow cones are enclosed and held together by a cylindrical tube bearing a lateral socket, characterized in that the double cone satisfies the following geometric conditions:

$0.001d \leq h \leq 20d$
$d \leq D \leq 200d$
$1° \leq \theta_1 \leq 10°$
$1° \leq \theta_2 \leq 10°$

and furthermore the condition

$$F = (1 + \sin \theta_1)^2 . \sin^2\theta_2 \leq 0.02 ,$$

where
    d      represents the minimum diameter at the virtual intersection plane of the two hollow cones,
    h      is the distance between the minor bases of the two hollow cone trunks
    D      is the maximum diameter of the hollow cone trunks
    $\theta_1$      represents the aperture angle of the entrance cone,
    $\theta_2$      represents the aperture angle of the exit cone
            and
    F      is the function as defined above,
and where moreover the inner diameter T of the hollow connecting cylinder measures between 1.5 and 10d, and the width S of the lateral socket tube between 0.001 and 10d, and where the distance h is created by cutting the tip of the exit cone alone in such a manner, that the smaller base of the entrance cone coincides with the virtual intersectional plane of the two cones, and the tip of the exit cone is curtailed by the length h, whereby the base diameter of the entrance cone remains d, and the base diameter of the exit cone is widened to

$$d_2 = d + h \cdot \left( \frac{D_2 - d}{L_2 + h} \right) ,$$

where $d_2$, $D_2$ and $L_2$ respectively represent the minimum and the maximum diameter and the length of the exit cone trunk.

2. Device according to claim 1, suitable for creating increased pressure, characterized in that an incompressible fluid medium is circulated by a mechanical pump through a closed system consisting of a double cone and a vessel, which is at least partially filled with the incompressible medium, whereby further fluid medium is introduced into the system by the sucking action of the double cone, this further fluid medium filling the system and raising the internal pressure.

## Revendications

1. Dispositif, consistant en un double cône composé de deux troncs de cône creux faisant face axialement par leurs bases mineures, qui sont entourés par un cylindre creux portant à sa surface un tuyau latéral, caractérisé en ce que le double cône satisfait les conditions géométriques

$0.001d \leq h \leq 20d$
$d \leq D \leq 200d$
$1° \leq \theta_1 \leq 10°$
$10° \leq \theta_2 \leq 10°$

9

et en plus la condition

F = (1 + sin $\theta_1$)2 $^\bullet$ sin2 $\theta_2$ ≦ 0.02 ,

où
    d      signifie le diamètre minimum du plan de coupe virtuel des deux troncs de cône,
    h      signifie la distance entre les deux bases mineures des troncs de cône,
    D      signifie le diamètre maximum des deux troncs de cône,
    $\theta_1$      est l'angle d'ouverture du cône d'entrée,
    $\theta_2$      est l'angle d'ouverture ducône de sortie
        et
    F      signifie la fonction comme definie ci-dessus

et où le diamètre intérieur T du cylindre creux se situe entre 1.5d et 10d et le diamètre intérieur S du tuyau latéral entre 0.001d et 10d et où la distance h est créée en taillant le cône de sortie de telle manière que la base mineure du cône d'entrée avec le diamètre d coincide avec le plan de coupe virtuel des deux troncs de cône et que le tronc de cône de sortie est raccourci d'un troncon de longueur h à tel point que le diamètre minimum du tronc de cône d'entrée reste égal à d et celui du cône de sortie s'aggrandit à la nouvelle valeur

$$d_2 = d + h \cdot \left(\frac{D_2 - d}{L_2 + h}\right),$$

où $d_2$, $D_2$ et $L_2$ respectivement signifient les diamètres minimum et maximum et la longueur du cône de sortie.

2.   Dispositif pour la créeation d'une surpression caractérisé en ce qu'un fluide incompressible est pompé autour d'un circuit fermé comprenant un double cône selon la revendication 1 et un récipient rempli partiellement d'un fluide compressible, où du fluide supplémentaire est aspiré dans le circuit par le vide provoqué à l'entrée latérale du double cône.

FIG.1

FIG.2

FIG.3

FIG.4

FIG.5

FIG.5a

FIG.6